# EUROPEAN PATENT APPLICATION

(11) **EP 3 975 522 A1**
(43) Date of publication of application: **30.03.2022**
(21) Application number: 21199158.3
(22) Date of filing: 27.09.2021
(51) Int. Cl.: H04L 67/51, H04W 12/08

(54) **REGISTRATION IN COMMUNICATION NETWORKS**

(30) Priority: 29.09.2020 IN 202041042324
(71) Applicant: Nokia Technologies Oy, 02610 Espoo (FI)
(72) Inventor: AGGARWAL, Chaitanya, Munich (DE); JERICHOW, Anja, Grafing bei Munchen (DE); GKELLAS, Georgios, Petroupoli (GR); KHARE, Saurabh, Bangalore (IN); LANDAIS, Bruno, Pleumeur-Bodou (FR)
(74) Representative: Nokia EPO representatives

(57) **Abstract**

According to an example aspect of the present invention, there is provided a method comprising receiving, by a network repository function, a registration request from an application function, wherein the registration request comprises at least one parameter that needs to be used for generating an access token for the application function, the at least one parameter being associated with the application function, registering the application function by the network repository function and transmitting, by the network repository function, a response to the registration request, wherein the response comprises the at least one parameter associated with the application function.

## Description

### FIELD

Various example embodiments relate in general to communication networks, such as core networks of cellular communication systems, and more specifically, to registration in such networks.

### BACKGROUND

Registration to services is needed in various communication networks. Registration needs to be enabled for example in core networks of cellular communication systems, such as in 5G core networks developed by the 3rd Generation Partnership Project, 3GPP. Using 5G as an example, in 5G core networks at least 3^{rd} party Application Functions, AFs, should be able to register to some services and improvements are needed for that. Also, in general there is a need to provide improved methods, apparatuses and computer programs for registration communication networks, such as in 5G core networks, and in other networks in the future as well.

### SUMMARY

According to some aspects, there is provided the subject-matter of the independent claims. Some example embodiments are defined in the dependent claims.

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect of the present invention, there is provided a method comprising receiving, by a network repository function, a registration request from an application function, wherein the registration request comprises at least one parameter that needs to be used for generating an access token for the application function, the at least one parameter being associated with the application function, registering the application function by the network repository function and transmitting, by the network repository function, a response to the registration request, wherein the response comprises the at least one parameter associated with the application function.

Example embodiments of the first aspect may comprise at least one feature from the following bulleted list:
- the at least one parameter associated with the application function is received as a part of an application function information object;
- the application function information object is received as a part of a network function profile or an application function profile of the application function;
- each of the at least one parameter identifies an object that needs to be verified by a network exposure function and/or a network function producer;
- receiving, by the network repository function, an access token request from the application function and responsive to the access token request, transmitting an access token to the application function by the network repository function, wherein the access token comprises the at least one parameter associated with the application function;
- signing, by the network repository function, the access token comprising the at least one parameter;
- storing the at least one parameter associated with the application function to a memory of the network repository function and retrieving, upon receiving the access token request, the at least one parameter associated with the application function from the memory of the network repository function;
- retrieving information about the application function from the memory of the network repository function during a discovery process of the application function performed by a network function and transmitting, to the network function, said information about the application function;
- the registration request is received directly from the application function and the response to the registration request is transmitted directly to the application function.

According to a second aspect of the present invention, there is provided a method comprising transmitting, by an application function, a registration request to a network repository function, wherein the registration request comprises at least one parameter that needs to be used for generating an access token for the application function, the at least one parameter being associated with the application function and receiving, by the application function, a response to the registration request, wherein the response comprises the at least one parameter associated with the application function.

Example embodiments of the second aspect may comprise at least one feature from the following bulleted list:
- the at least one parameter associated with the application function is transmitted as a part of an application function information object;
- the application function information object is transmitted as a part of a network function profile or an application function profile of the application function;
- each of the at least one parameter identifies an object that needs to be verified by a network exposure function and/or a network function producer;
- transmitting, by the application function, an access token request to the network repository function and in response to the access token request, receiving an access token from the network repository function, wherein the access token comprises the at least one parameter provided by the application function during registration;
- the access token comprising the at least one parameter is signed by the network repository function;
- the registration request is transmitted directly to the network repository function and the response to the registration request is received directly from the network repository function.

Example embodiments of the first or the second aspect may comprise at least one feature from the following bulleted list:
- the application function is a trusted third party application function;
- the network repository function is in a core network of a cellular communication network;
- the core network is a 5G core network.

According to a third aspect of the present invention, there is provided an apparatus, comprising one or more processors, and memory storing instructions that, when executed by the one or more processors, cause the apparatus to perform perform a method according to the first aspect. The at least one memory and the computer program code may be configured to, with the at least one processing core, cause the apparatus at least to perform, receive, by a network repository function, a registration request from an application function, wherein the registration request comprises at least one parameter that needs to be used for generating an access token for the application function, the at least one parameter being associated with the application function, register the application function by the network repository function and transmit, by the network repository function, a response to the registration request, wherein the response comprises the at least one parameter associated with the application function. The apparatus of the third aspect may be the network repository function, or a device controlling functioning thereof.

According to a fourth aspect of the present invention, there is provided an apparatus, comprising one or more processors, and memory storing instructions that, when executed by the one or more processors, cause the apparatus to perform perform a method according to the second aspect. The at least one memory and the computer program code may be further configured to, with the at least one processing core, cause the apparatus at least to perform, transmit, by an application function, a registration request to a network repository function, wherein the registration request comprises at least one parameter that needs to be used for generating an access token for an application function, the at least one parameter being associated with the application function and receive, by the application function, a response to the registration request, wherein the response comprises the at least one parameter associated with the application function. The apparatus of the fourth aspect may be the application function, or a device controlling functioning thereof.

According to a fifth aspect of the present invention, there is provided an apparatus, comprising means for performing a method according to the first aspect. The apparatus may comprise means for means for receiving, by a network repository function, a registration request from an application function, wherein the registration request comprises at least one parameter that needs to be used for generating an access token for the application function, the at least one parameter being associated with the application function, means for registering the application function by the network repository function and means for transmitting, by a network repository function, a response to the registration request, wherein the response comprises the at least one parameter associated with the application function. The apparatus of the fifth aspect may be the network repository function, or a device controlling functioning thereof.

According to a sixth aspect of the present invention, there is provided an apparatus, comprising means for performing a method according to the second aspect. The apparatus may comprise means for transmitting, by an application function, a registration request to a network repository function, wherein the registration request comprises at least one parameter that needs to be used for generating an access token for an application function, the at least one parameter being associated with the application function and means for receiving, by the application function, a response to the registration request, wherein the response comprises the at least one parameter associated with the application function. The apparatus of the sixth aspect may be the application function, or a device controlling functioning thereof.

According to a seventh aspect of the present invention, there is provided non-transitory computer readable medium having stored thereon a set of computer readable instructions that, when executed by at least one processor, cause an apparatus to at least perform the method of the first aspect. According to an eighth aspect of the present invention, there is provided non-transitory computer readable medium having stored thereon a set of computer readable instructions that, when executed by at least one processor, cause an apparatus to at least perform the method of the second aspect.

According to a ninth aspect of the present invention, there is provided a computer program configured to perform the method of the first aspect. According to a tenth aspect of the present invention, there is provided a computer program configured to perform the method of the second aspect.

### BRIEF DESCRIPTION OF THE DRAWINGS

FIGURE 1 illustrates a system in accordance with at least some example embodiments;
FIGURE 2 illustrates a first process in accordance with at least some example embodiments;
FIGURE 3 illustrates a second process in accordance with at least some example embodiments;
FIGURE 4 illustrates an example apparatus capable of supporting at least some example embodiments;
FIGURE 5 illustrates a flow graph of a first method in accordance with at least some example embodiments; and
FIGURE 6 illustrates a flow graph of a second method in accordance with at least some example embodiments.

### EXAMPLE EMBODIMENTS

The procedures described herein enable registration for example for 3^{rd} party Application Functions, AFs, in communication networks, such as in 5G core networks or in other core networks. At least in the case of 5G core networks, the network may comprise a Network Repository Function, NRF, and an AF. According to some example embodiments of the present invention, registration of trusted 3^{rd} party AFs may be enabled by exploiting at least one subject parameter identifying an object, such as a location, time-of-day or subscriber identity range, associated with the AF or more specifically, in some example embodiments, associated with at least one subscriber of the AF. That is to say, the at least one subject parameter may be AF-specific. The at least one subject parameter may identify an object that needs to be verified by a Network Exposure Function, NEF, and/or a Network Function Producer, NFP, associated with the NEF.

A subject parameter may be referred to as a parameter or as an authorization parameter in general. The subject parameter may be specific to a subject of a registration request and a subsequent access token, such as an OAuth token for example. That is to say, the subject of the registration request and the access token may be the AF that uses the access token to access a service provided by another network function.

Embodiments of the present invention make it possible for the AF to register directly with the NRF, i.e., the AF may transmit a registration request to the NRF directly. The registration request may comprise the at least one subject parameter associated with the AF and the NRF may register the AF and store the at least one subject parameter upon receiving the registration request. The NRF may then transmit a response to the registration request, the response also comprising the at least one subject parameter associated with the AF. Later on, the NRF may use the at least one subject parameter associated with the AF to generate one or more access tokens for the AF. The AF may use the access token comprising the at least one subject parameter to access services of the NFP, once the access token has been verified by the NEF and/or the NFP.

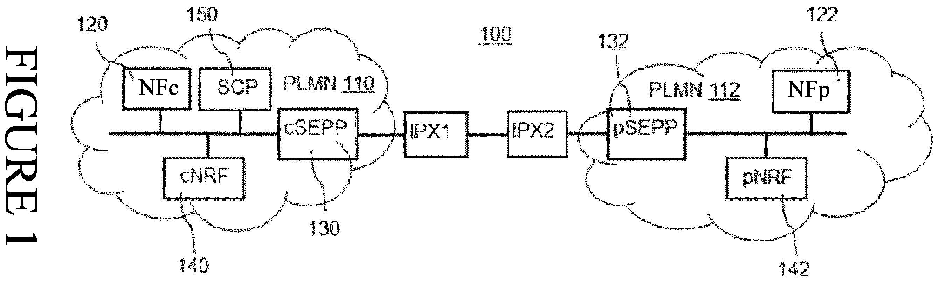

FIGURE 1 illustrates a system in accordance with at least some example embodiments of the present invention. The exemplary system shown in FIGURE 1 comprises AF 102, NRF 104 and NEF 106. A North bound interface, Nnef 105, may exist between AF 102 and NEF 106.

AF 102, NRF 104 and NEF 106 may be Network Functions, NFs. In case of a 3^{rd} Generation Partnership Project, 3GPP, Service-Based Architecture, SBA, of 5G core networks, a NF may refer to an operational and/or a physical entity. An NF may be a specific network node or element, or a specific function or set of functions carried out by one or more entities, such as Virtual Network Functions, VNFs. At least some embodiments of the present invention may be applied in containerized deployments as well. One physical node may be configured to perform functionalities of plural NFs. Examples of such network functions include a (radio) access or resource control or management function, session management or control function, interworking, data management or storage function, authentication function or a combination of one or more of these functions. In some example embodiments, AF 102 may not be a NF though as defined by the 3GPP. Instead, the AF may be a complement to the NF. The AF may be a 3^{rd} party AF, e.g., for an enterprise.

AF 102 may be an AF as defined in the 3GPP standard specification TS 29.517. In some example embodiments, OAuth based authorization and token exchange may be applied between mobile networks. Thus, NRF 104 may be or perform functionalities of an OAuth server. NRF 104 may be an NRF as defined in the 3GPP standard specification TS 29.510, wherein token and management end points of NRFs are defined. In addition, NEF 106, which may expose 3GPP network capabilities to AF 102 via RESTful Application Programming Interfaces, APIs, may be a NEF as defined in the 3GPP standard specification TS 29.522.

As the North bound interface, Nnef 105, may exist between AF 102 and NEF 106, AF 102 would need to contact either a CAPIF (not shown in FIGURE 1) or NRF 104 to get to an endpoint of NEF 106. Said CAPIF may be a CAPIF of NEF 106 or a CAPIF of another NEF. On the other hand, the CAPIF or NRF 104 should be already aware of AF 102 before providing the endpoint of NEF 106 or granting an access token for AF 102, wherein the access token can be used to access the services of a NFP which is associated with NEF 106.

So when NRF 104 must issue an access token based on specific parameters of AF 102, NRF 104 would need to rely on local configurations. Embodiments of the present invention therefore provide network configurability for issuing an access token, instead of local configurations, and registration of AF 102 with NRF 104. For instance, the network is allowed to configure the at least one subject parameter, which may be stored at NRF 104, as a means of registration.

Also, NEF 106 may discover end points of a specific AF 102 given an instance ID of AF 102, e.g., for trusted 3^{rd} party AFs that intend to use an absolute path URI. NEF 106 may discover end points of a specific AF 102 when the callback URI that is provided during onboarding is not reachable and there is no alternate way for NEF 106 to reach AF 102. For instance, for a certain monitoring event notification, AF 102 may provide a callback URI for NEF 106 so that NEF 106 can notify AF 102 that has subscribed for the event. So when AF 102 has registered in NRF 104 but NEF 106 cannot reach AF 102 on a shared callback URI, NEF 106 can discover AF endpoints which satisfy some criteria, such as "another AF that serves the same subscriber with an external ID or external group ID. That is to say, if NEF 106 fails to reach AF 102 with the provided callback URI, it can try to get help from NRF 104 in discovering the alternative end points for AF 102.

In some example embodiments, a trusted AF by an operator, such as AF 102 in FIGURE 1, may be allowed to contact NRF 104 for the purpose of discovery (for example as defined in the 3GPP standard specification TS 23.502, section 5.2.7.1, "Table 5.2.7.1-1: NF services provided by the NRF"). This indicates that there may already exist a trust between trusted 3^{rd} party AF 102 and NRF 104 as defined in the 3GPP standard specifications. Such trust may be extended to other services provided by NRF 104 for AF 102.

For instance, trusted 3^{rd} party AF 102 may register directly with NRF 104 and provide to NRF 104 at least one subject parameter associated with AF 102, wherein the at least one subject parameter needs to be used for generating an access token for AF 102. The at least one subject parameter associated with AF 102 may be provided as a part of application function information (Aflnfo) to NRF 104 as well. Said application function information may be provided, e.g., as a part of a network function profile (NfProfile) or in an application function profile (AfProfile), which has a different structure compared to the network function profile.

In some example embodiments, the at least one subject parameter that is associated with AF 102 may be associated with the at least one subscriber of AF 102. For instance, the at least one subject parameter may be specific for the AF in question and identify an object, such as a subscriber identity range, or even specific for the at least one subscriber of AF 102 and identify an object, such as a location wherein access is allowed or time-of-day when access is allowed. For instance, subscriber identity ranges may refer to identities such as SUPI, GPSI, MSISDN and external identities. The at least one subject parameter may need to be used by NRF 104 for generating an access token so that an object, identified by the at least one subject parameter, may be verified by NEF 106 and/or a NFP associated with NEF 106 before providing the required service. In some example embodiments, the object, or a type of the object, may be identified in a subject parameter type (subjectParameterType) and the corresponding object, which may comprise a value for that specific subject parameter type, may also be present therein. That is to say, the object itself may be transmitted along with each of the at least one subject parameter.

The at least one subject parameter may identify an object that needs to be verified by NEF 106 and/or the NFP. The at least one subject parameter may relate to information that the NFP has and in such case a quick one-step authorization process by the NFP may be used to enhance authorization. In some example embodiments, the at least one subject parameter may relate to information that both, the NFP and NEF 106, have. Thus a two-stage authorization process may be used, where NEF 106 may reject at least some of the requests directed toward NFPs, thereby helping to protect the NFPs from denial-of-service attacks, for example. Alternatively, or in addition, the at least one subject parameter may relate to information the NFP has but NEF 106 does not have, wherefore NEF 106 may not even be able to verify the at least one subject parameter. In such cases the-two stage authorization process may be used to enable authorization, e.g., for location-based services.

The at least one subject parameter may identify a location object, time-of-day object or subscriber identity range object. Location-based access may require verification of the location of AF 102 or at least one subscriber of AF 102 to determine whether a request for a service may be granted, i.e., the location object may indicate that the location needs to be verified. Verification of the location may comprise comparing the location of AF 102, or the location of the at least one subscriber of AF 102, to a region wherein AF 102 is allowed to access the at least one service provided that, or when, AF 102 or the at least one subscriber is within the region, i.e., to see whether the location of AF 102 or the location of the at least one subscriber of AF 102 is within the region and if so, AF 102 is allowed to access the at least one service. That is to say, the NFP may check the location object in an access token against the location of AF 102 or the at least one subscriber and if it matches, AF 102 may be allowed to access the at least one service. For instance, the request may be granted if the at least one subscriber is within the region and rejected if the at least one subscriber is outside of the region wherein AF 102 is allowed to access the at least one service.

The time-of-day object may be related to access or parameter provisioning for IoT devices, i.e., require verifying whether AF 102 is allowed to access the requested service at a certain time-of-day, to determine whether a request for a service may be granted. Verification of the time-of-day may comprise comparing the time-of-day to a time when AF 102 is allowed to access the at least one service. If the time-of-day is such that AF 102 is allowed to access the at least one service, the request may be granted but otherwise the request may be denied.

The subscriber identity range object may require verifying that a subscriber identity range of AF 102, e.g., the subscriber identity range that AF 102 can access for a given application type, comprises an identity of the at least one subscriber. That is to say, verification of the subscriber identity range may comprise comparing the identity of the at least one subscriber to the subscriber identity range, to see whether the identity is within the subscriber identity range. If the identity is within the subscriber identity range, the request may be accepted, i.e., AF 102 may be allowed to access the at least one service, but otherwise the request may be denied.

It should be noted that some examples about possible subject parameters and objects are provided above, but in general embodiments of the present invention may be exploited for various other subject parameters and objects that need to be verified, and for different scenarios as well.

For example, it may be ensured that AF 102 cannot access data of subscribers belonging to the other AFs. In some example embodiments, subscribers belonging to different AFs may have overlapping DNNs though. So for example, if the subscriber identity range of a first AF, such as AF 102, is 10000XXXXX and the subscriber identity range of a second AF is 20000XXXXX, some embodiments of the present invention may be used to ensure that NEF 106 and/or the NFP, knows that the first AF is not meant to monitor events for a subscriber belonging to the subscriber identity range 20000XXXXX. Moreover, any NFP such as a UDM may be provided with information of the AF that sent the request concerning the at least one service of the NFP, thereby making it possible for the NFP to perform authorization as well.

Embodiments of the present invention provide a way for AF 102 (i.e., subject of the access token, client in the communication) to make the at least one subject parameter known at a network, i.e., at NRF 104. The at least one subject parameter may be provided during registration of AF 102. Hence, interaction between AF 102 and NRF 104 may comprise sharing information about the at least one subject matter associated with AF 102 in addition to sharing information for discovery of NEF 106.

Registration of AF 102 may be performed only by an NF that provides a service, such as NRF 104. In some example embodiments of the present invention, it may be therefore required that AF 102 provides specific parameters, like the at least one subject parameter associated with AF 102, to NRF 104 so that NRF 104 can store the at least one subject parameter associated with AF 102. NRF 104 (Nnrf AccessToken end point) then needs to use the at least one subject parameter associated with AF 102 to generate an access token for AF 102. The at least one subject parameter may be thus included in the access token. In general, AF 102 may be a trusted AF, such as a trusted 3^{rd} third party AF.

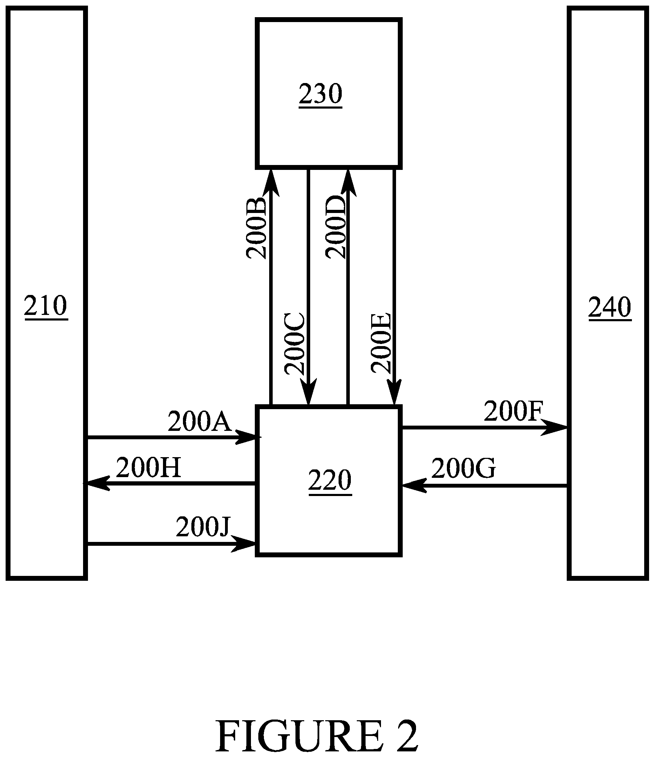

FIGURE 2 illustrates a first process in accordance with at least some example embodiments. On the vertical axes are disposed, from the left to the right, AF 102 and NRF 104. Time advances from the top towards the bottom.

At Step 210, AF 102 may transmit a registration request to NRF 104. The registration request may comprise at least one subject parameter associated with AF 102, wherein the at least one subject parameter is such that it needs to be used for generating an access token for AF 102. The at least one subject parameter associated with AF 102 may identify an object, such as a location, time-of-day or subscriber identity range, which needs to be verified by NEF 106 or the NFP.

In some example embodiments, the registration request may be in the following form: "PUT Nrf_NfManagement/nnrf-nfm/v1/nf-instances/{AFInstanceID}, (NfProfile(AfInfo(subjectParameters)))". That is to say, the at least one subject parameter associated with AF 102 may be transmitted as a part of an application function information object (Aflnfo) of AF 102. More specifically, the application function information object (Aflnfo) may be transmitted as a part of a network function profile (NfProfile) of AF 102.

Thus, AF 102 may register with NRF 104 for example by using existing registration API at NRF 104. AF 102 may provide its subject parameters as part of the application function information object and the application function information object may exist as a part of the network function profile of AF 102. The application function information object may be used by NRF 104 to generate tokens, e.g., by adding the at least one subject parameter associated with AF 102 to an access token before signing the access token.

Alternatively, the registration request may be in the following form: "PUT Nrf_NfManagement/nnrf-nfm/v1/nf-instances/{AFInstanceID}, (AfProfile(AfInfo(subjectParameters)))". That is to say, the at least one subject parameter associated with AF 102 may be transmitted as a part of an application function information object (Aflnfo) of AF 102. More specifically, the application function information object (Aflnfo) may be transmitted as a part of an application function profile (AfProfile) of AF 102.

Thus, AF 102 may also have some specific data that applies only to AFs, i.e., the network function profile may be specific to NFs and in such a case the application function information object would not be a part of the network function profile. AF 102 may therefore register with NRF 104 using a dedicated data structure called the application function profile. And again, the application function information object of AF 102 may be used by NRF 104 to generate tokens e.g., by adding the at least one subject parameter associated with AF 102 to an access token before signing the access token.

At step 220, NRF 104 may transmit a response to the registration request to AF 102. The response may comprise the at least one subject parameter associated with AF 102, the at least one subject parameter that needs to be used for generating an access token for AF 102. In some example embodiments, the response may be in the following form: "201 Context Created, (NfProfile(AfInfo(subjectParameters)))". That is to say, the application function information object (Aflnfo) may be transmitted in the response as a part of a network function profile (NfProfile) if the application function information object (Aflnfo) was received as a part of a network function profile (NfProfile) of AF 102.

Alternatively, the response may be in the following form: "201 Context Created, (AfProfile(AfInfo(subjectParameters)))". That is to say, the application function information object (Aflnfo) may be transmitted in the response as a part of an application function profile (AfProfile) if the application function information object (Aflnfo) was received as a part of an application function profile (AfProfile) of AF 102.

NRF 104 may store the at least one subject parameter associated with AF 102 as well. For instance, the at least one subject parameter associated with AF 102 may be stored to a memory of NRF 104, to be retrieved from the memory upon receiving an access token request from AF 102. Alternatively, the at least one subject parameter may be retrieved as a part of discovery any NF (currently NEF) in case NRF 104 wants to find alternate end points to AF 102, which may be unreachable on a preshared endpoint. Thus, information about AF 102, such as a trusted 3^{rd} party AF may be provisioned to NRF 104 before the access token request.

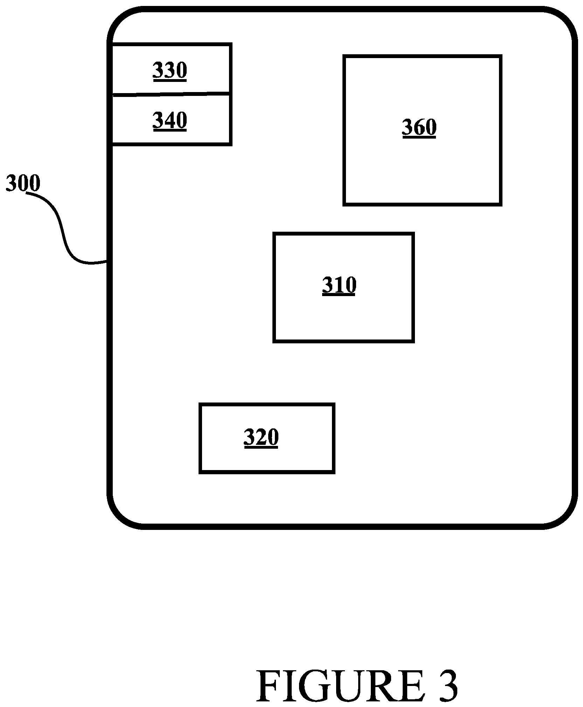

FIGURE 3 illustrates a second process in accordance with at least some example embodiments. On the vertical axes are disposed, from the left to the right, AF 102, NRF 104 and NEF 106. Time advances from the top towards the bottom.

At step 310, AF 102 may transmit an access token request to NRF 104. The access token request may be in the following form: "POST/oauth2/token (AccessTokenReq). In some example embodiments, the access token request may not comprise the at least one subject parameter associated with AF 102, if the at least one subject parameter has been transmitted to NRF 104 beforehand in a registration request, e.g., at step 210 in FIGURE 2. That is to say, the access token request may be transmitted without the at least one subject parameter. The access token request may concern accessing services of a NFP which is associated with NEF 106.

At step 320, NRF 104 may use the application function information (Aflnfo) to generate an access token for AF 102 upon receiving the access token request. The at least one subject parameter associated with AF 102 may be derived from the parameters in the application function information. For instance, NRF 104 may retrieve the at least one subject parameter associated with AF 102, e.g., from the memory of NRF 104 upon receiving the access token request.

At step 330, NRF 104 may transmit an access token to AF 102 in an access token response. The access token may comprise the at least one subject parameter associated with AF 102. In some example embodiments, the access token comprising the at least one subject parameter associated with AF 102 may be signed by NRF 104. The access token response may be in the following form: "200 OK, AccessTokenRsp(AccessTokenClaims(SubjectParamaters))".

Upon receiving the access token response, AF 102 may, at step 340, transmit a service request to NEF 106, such as a NEF Service Request(AccessToken). The service request may thus comprise the access token signed by NRF 104. The service request may be related to accessing at least one service of the NFP which is associated with NEF 106.

At step 350, NEF 106 may perform checks as described in IN202041009301. For instance, NEF 106 may check that a subscriber identity range of AF 102 comprises an identity of at least one subscriber associated with AF 102 and/or that a time-of-day is such that AF 102 is allowed to access the at least one service of the NFP which is associated with NEF 106. In some example embodiments, NEF 106 may transmit, upon successfully checking/verifying at least one subject parameter associated with AF 102, said at least one subject parameter to the NFP. Alternatively, NEF 106 may transmit another parameter associated with AF 102 to the NFP without transmitting said at least one parameter.

Thus, in some example embodiments, a target NF, i.e., the NFP, may perform additional checks as described in IN202041009301. For instance, the NFP may check that a subscriber identity range of AF 102 comprises an identity of at least one subscriber associated with AF 102 and/or that a time-of-day is such that AF 102 is allowed to access the at least one service of the NFP which is associated with NEF 106. Hence, two-staged authorization may be enabled.

In some example embodiments, the NFP may check, when the at least one subject parameter associated with AF 102 identifies a location object, a location of at least one subscriber of AF 102 versus a region wherein AF 102 is allowed to access the at least one service when the at least one subscriber is within the region. Hence, NEF 106 may for example check that a subscriber identity range of AF 102 comprises an identity of the at least one subscriber and the NFP may verify the location of AF 102 or the location of the at least one subscriber of AF 102, thereby enabling proper authentication for various services, such as location-based services, because NEF 106 may not know the location of AF 102 or the at least one subscriber of AF 102.

At step 360, NEF 106 may transmit a service response to AF 102, such as a NEF Service Response, 200 OK, if all the checks have been passed.

In some example embodiments, NRF 104 may retrieve information about AF 102 from the memory of NRF 104 during a discovery process of AF 102 performed by a NF. For instance, end points of AF 102 may be discovered by any other NF based on the registration of AF 102 at NRF 104. In addition, some of the parameters registered by AF 102 may be used in a discovery query. Upon retrieving said information about AF 102, NRF 104 may transmit, to the NF, said information about AF 102.

According to some example embodiments of the present invention, some changes may be made to 3GPP standard specification TS 29.510. For instance, NFProfile defined in TS29510_Nnrf_NFManagement.yaml may be modified as below:

```
components:
 schemas:
  NFProfile:
   type: object
   required:
    - nfInstanceId
    - nfType
    - nfStatus
   anyOf:
    - required: [ fqdn ]
    - required: [ ipv4Addresses ]
    - required: [ ipv6Addresses ]
   properties:
    aflnfo:
     $ref: '#/components/schemas/Aflnfo'
  Aflnfo:
   type: array
   items:
    "$ref": "/components/schemas/SubjectParameter"
```

According to some example embodiments of the present invention, if a separate structure is desired, AFProfile may be defined in TS29510_Nnrf_NFManagement.yaml as follows:

```
 components:
 schemas:
  AfProfile:
   type: object
   required:
    - aflnfo
   properties:
    aflnfo:
     $ref: '#/components/schemas/Aflnfo'
```

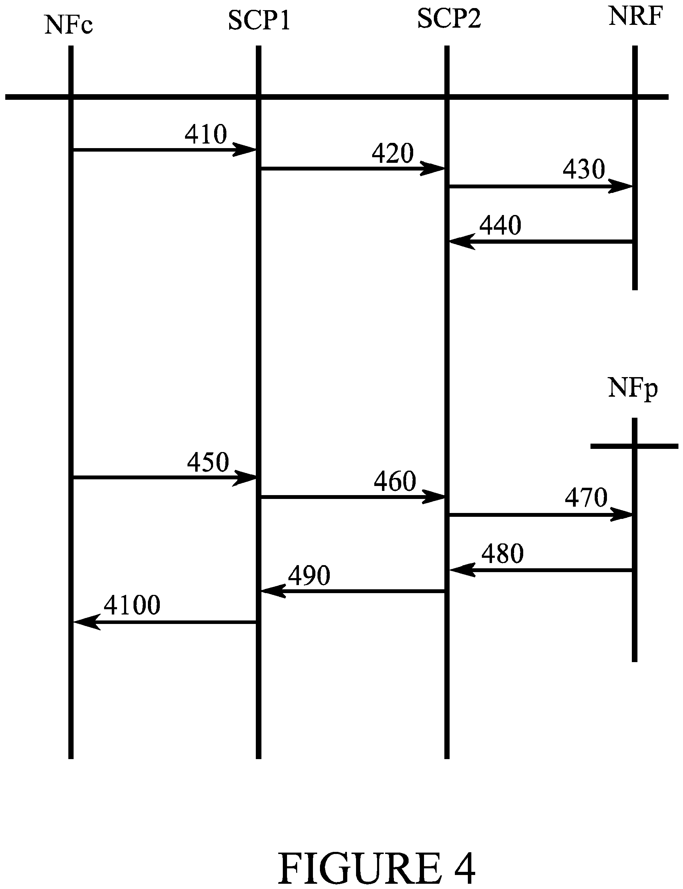

FIGURE 4 illustrates an example apparatus capable of supporting at least some example embodiments. Illustrated is device 400, which may comprise, for example, AF 102 or NRF 104, or a device controlling functioning thereof. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. Processor 410 may comprise at least one Application-Specific Integrated Circuit, ASIC. Processor 410 may comprise at least one Field-Programmable Gate Array, FPGA. Processor 410 may comprise an Intel Xeon processor for example. Processor 410 may be means for performing method steps in device 400, such as determining, causing transmitting and causing receiving. Processor 410 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular standard, such as a standard defined by the 3GPP. Transmitter 430 may comprise more than one transmitter. Receiver 440 may comprise more than one receiver. Transmitter 430 and/or receiver 440 may be configured to operate in accordance with a suitable communication standard.

Device 400 may comprise User Interface, UI, 450. UI 450 may comprise at least one of a display, a keyboard, a touchscreen, a vibrator arranged to signal to a user by causing device 400 to vibrate, a speaker and a microphone. A user may be able to operate device 400 via UI 450, for example to configure device 400 and/or functions it runs.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. In some example embodiments, device 400 lacks at least one device described above. For example, device 400 may not have UI 450.

Processor 410, memory 420, transmitter 430, receiver 440 and/or UI 450 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the present invention.

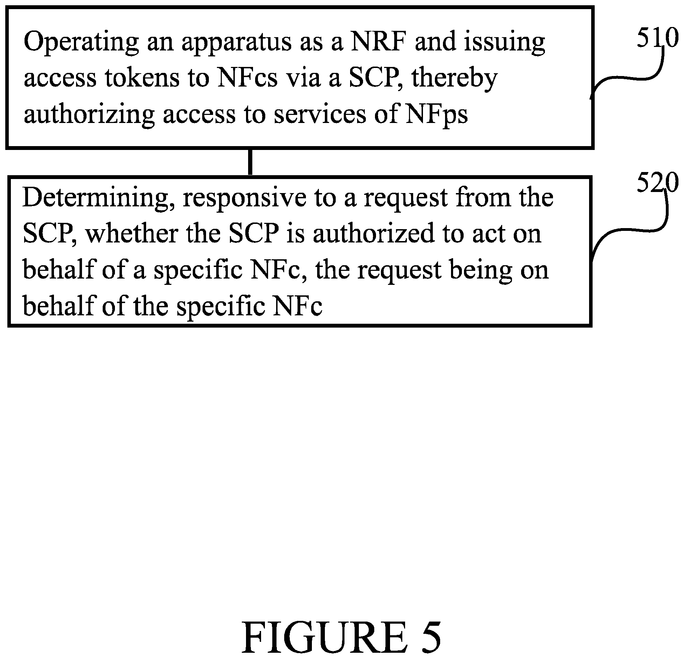

FIGURE 5 is a flow graph of a first method in accordance with at least some example embodiments. The phases of the illustrated first method may be performed by NRF 104, or by a control device configured to control the functioning thereof, possibly when installed therein.

The first method may comprise, at step 510, receiving, by a network repository function, a registration request from an application function, wherein the registration request comprises at least one parameter that needs to be used for generating an access token for the application function, the at least one parameter being associated with the application function. The first method may further comprise, at step 520, registering the application function by the network repository function. Finally, the first method may comprise, at step 530, transmitting, by the network repository function, a response to the registration request, wherein the response comprises the at least one parameter associated with the application function.

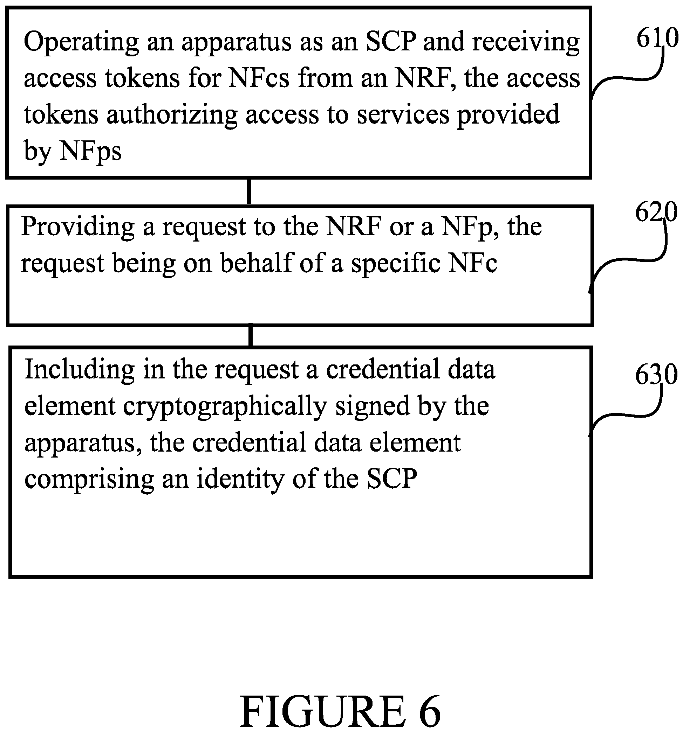

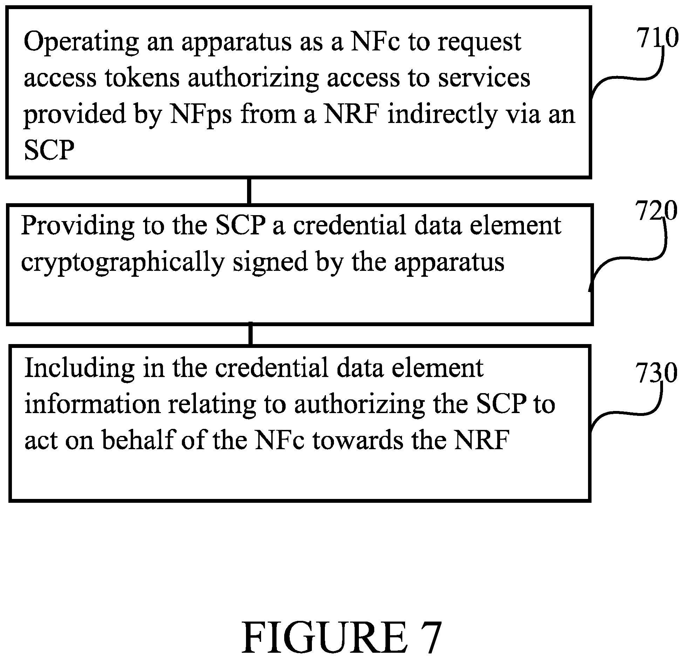

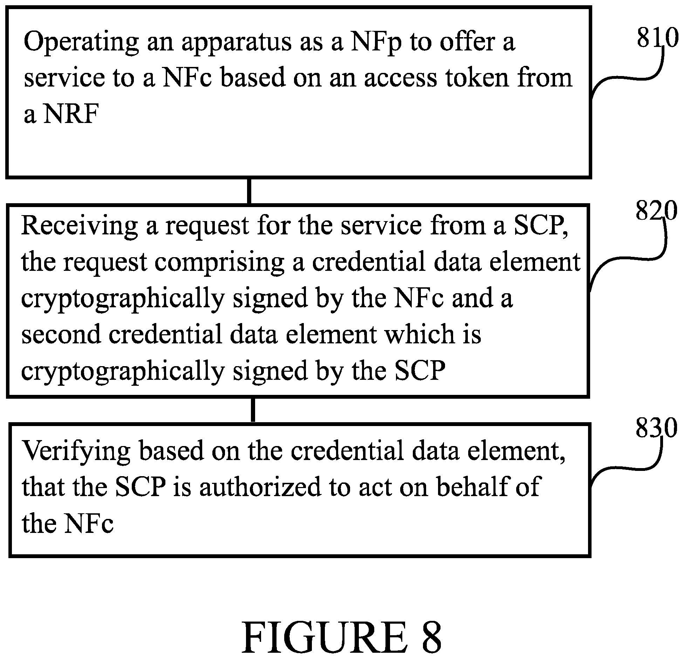

FIGURE 6 is a flow graph of a second method in accordance with at least some example embodiments. The phases of the illustrated second method may be performed by AF 102, or by a control device configured to control the functioning thereof, possibly when installed therein.

The second method may comprise, at step 610, transmitting, by an application function, a registration request to a network repository function, wherein the registration request comprises at least one parameter that needs to be used for generating an access token for the application function, the at least one parameter being associated with the application function. The second method may also comprise, at step 620, receiving, by the application function, a response to the registration request, wherein the response comprises the at least one parameter associated with the application function.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, AF 102 or NRF 104, or a device controlling functioning thereof, may comprise means for carrying out the example embodiments described above and any combination thereof.

In an example embodiment, a computer program may be configured to cause a method in accordance with the example embodiments described above and any combination thereof. In an exemplary example embodiment, a computer program product, embodied on a non-transitory computer readable medium, may be configured to control a processor to perform a process comprising the example embodiments described above and any combination thereof.

In an example embodiment, an apparatus, such as, for example, AF 102 or NRF 104, or a device controlling functioning thereof, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the example embodiments in one or more particular applications, it will be apparent to those of ordinary skill in the art that numerous modifications in form, usage and details of implementation may be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application at least in 5G core networks.

### ACRONYMS LIST

- 3GPP: 3rd Generation Partnership Project
- AF: Application Function
- API: Application Programming Interface
- NEF: Network Exposure Function
- NF: Network Function
- NFP: NF Producer
- NRF: Network Repository Function
- QoS: Quality of Service
- SBA: Service-Based Architecture
- VNF: Virtual Network Function

**REFERENCE SIGNS LIST**

| | |
|---|---|
| 102 | AF |
| 104 | NRF |
| 106 | NEF |
| 210, 220 | Steps of the process of FIGURE 2 |
| 310 - 360 | Steps of the process of FIGURE 3 |
| 400 - 450 | Structure of the apparatus of FIGURE 4 |
| 510-530 | Phases of the first method in FIGURE 5 |
| 610 - 620 | Phases of the first method in FIGURE 6 |

## Claims

1. An apparatus comprising:
- means for receiving, by a network repository function, a registration request from an application function, wherein the registration request comprises at least one parameter that needs to be used for generating an access token for the application function, the at least one parameter being associated with the application function;
- means for registering the application function by the network repository function; and
- means for transmitting, by the network repository function, a response to the registration request, wherein the response comprises the at least one parameter associated with the application function.

2. An apparatus according to claim 1, wherein the at least one parameter associated with the application function is received as a part of an application function information object.

3. An apparatus according to claim 2, wherein the application function information object is received as a part of a network function profile or an application function profile of the application function.

4. An apparatus according to any of the preceding claims, wherein each of the at least one parameter identifies an object that needs to be verified by a network exposure function and/or a network function producer.

5. An apparatus according to any of the preceding claims, further comprising:
- means for receiving, by the network repository function, an access token request from the application function;
- means for transmitting an access token to the application function by the network repository function responsive to the access token request, wherein the access token comprises the at least one parameter associated with the application function.

6. An apparatus according to claim 5, further comprising:
- means for signing, by the network repository function, the access token comprising the at least one parameter.

7. An apparatus according to claim 5 or claim 6, further comprising:
- means for storing the at least one parameter associated with the application function to a memory of the network repository function; and
- means for retrieving, upon receiving the access token request, the at least one parameter associated with the application function from the memory of the network repository function.

8. An apparatus according to claim 5 or claim 6, further comprising:
- means for retrieving information about the application function from the memory of the network repository function during a discovery process of the application function performed by a network function;
- means for transmitting, to the network function, said information about the application function.

9. An apparatus according to any of the preceding claims, wherein the registration request is received directly from the application function and the response to the registration request is transmitted directly to the application function.

10. An apparatus comprising:
- means for transmitting, by an application function, a registration request to a network repository function, wherein the registration request comprises at least one parameter that needs to be used for generating an access token for the application function, the at least one parameter being associated with the application function; and
- means for receiving, by the application function, a response to the registration request, wherein the response comprises the at least one parameter associated with the application function.

11. An apparatus according to claim 10, wherein the at least one parameter associated with the application function is transmitted as a part of an application function information object.

12. An apparatus according to claim 11, wherein the application function information object is transmitted as a part of a network function profile or an application function profile of the application function.

13. An apparatus according to any of claims 10 to 12, wherein each of the at least one parameter identifies an object that needs to be verified by a network exposure function and/or a network function producer.

14. An apparatus according to any of claims 10 to 13, further comprising:
- means for transmitting, by the application function, an access token request to the network repository function;
- means for receiving an access token from the network repository function in response to the access token request, wherein the access token comprises the at least one parameter provided by the application function during registration.

15. A method comprising:
- receiving, by a network repository function, a registration request from an application function, wherein the registration request comprises at least one parameter that needs to be used for generating an access token for the application function, the at least one parameter being associated with the application function;
- registering the application function by the network repository function; and
- transmitting, by the network repository function, a response to the registration request, wherein the response comprises the at least one parameter associated with the application function.
